**Europäisches Patentamt**

**European Patent Office**

**Office européen des brevets**

(19)

(11) Veröffentlichungsnummer: **0 258 439**
**A1**

(12) # EUROPÄISCHE PATENTANMELDUNG

Veröffentlicht nach Art. 158 Abs. 3 EPÜ

(21) Anmeldenummer: **86904457.8**

(22) Anmeldetag: **20.02.86**

Daten der zugrundeliegenden internationalen Anmeldung:

(86) Internationale Anmeldenummer:
**PCT/SU86/00013**

(87) Internationale Veröffentlichungsnummer:
**WO87/04955 (27.08.87 87/19)**

(51) Int. Cl.³: **B 23 K 9/18**
**B 23 K 9/16**

(43) Veröffentlichungstag der Anmeldung:
**09.03.88 Patentblatt 88/10**

(84) Benannte Vertragsstaaten:
**DE FR GB IT SE**

(71) Anmelder: **VSESOJUZNY NAUCHNO-ISSLEDOVATELSKY PROEKTNO-KONSTRUKTORSKY I TEKHNOLOGICHESKY INST. ELEKTROSVAROCHNOGO OBORUDOVANIA (VNIIESO)**
ul. Litovskaja, 10
**Leningrad, 194100(SU)**

(72) Erfinder: **IVANNIKOV, Alfred Vasilievich**
**Vasilievsky ostrov, 4-45-10**
**Leningrad, 199053(SU)**

(72) Erfinder: **ABUDARDIN, Vladimir Zagitovich**
ul. Rudneva, 5-1-179
**Leningrad, 194122(SU)**

(74) Vertreter: **Patentanwälte Zellentin & Partner**
Zweibrückenstrasse 15
**D-8000 München 2(DE)**

(54) **VERFAHREN ZUM ELEKTROSCHLACKEN-PUNKTSCHWEISSEN MIT ABSCHMELZELEKTRODE.**

(57) The method consists in fixing a consumable electrode (1) in relation to the current supplying device (2), placed above the surface (4) of the part (5) to be welded and exciting the welding arc (8) between the butt-end (3) of the electrode (1) and the surface (4) of the part (5). Then the electrode is moved to the welding zone (9) by quickly bringing the current supplying device (2) close to the surface (4) of the part (5) at a speed exceeding the welding speed of the electrode (1).

FIG. 1

0258439
Eu 87 614 RZ/HU

# METALL-INERTGAS-LICHTBOGENPUNKTSCHWEISSVERFAHREN

## Gebiet der Technik

Die vorliegende Erfindung betrifft das elektrische Metall-Inertgasschweißen, und zwar ein Metall-Inertgas-Lichtbogenpunktschweißverfahren.

## Stand der Technik

Bekannt ist ein Unterpulver-Lichtbogenpunktschweißverfahren, das durch eine Vorrichtung realisiert wird, die in dem Buch "Issledovania i proizvodstvenny opyt po svarke" im Beitrag von Ju.M. Slessarev "Elektrozaklepochnaya svarka v stroitelnom i doroshnom mashinostroenii", Verlag Mashgiz, 1955, S. 75-76 beschrieben ist. Das Verfahren besteht darin, daß eine Schmelzelektrode relativ zu einer stromzuführenden Vorrichtung unbeweglich befestigt und ein Schweißbogen zwischen dem Kopfende der Schmelzelektrode und der Oberfläche des Werkstücks gezündet wird. In den entstehenden Schmelzraum wird die Schmelzelektrode nicht hineingeführt, sondern sie schmilzt nur durch das Auseinanderziehen des Schweißbogens je nach dem Abschmelzen der Elektrode auf solch eine Entfernung, die der Reißlänge des Schweißbogens entspricht. Dabei entfernt sich das Ende der Schmelzelektrode von der Oberfläche des Werkstücks im Moment der Zündung des Schweißbogens, während der Strom fällt.

Ungeachtet dessen, daß dieses Verfahren überaus einfach in der Durchführung ist, weist es eine geringe Effektivität auf, da es durch eine geringe Konzentration der Wärmezufuhr im Schweißpunkt, eine erhebliche Dauer des Schweißzyklus' und einen erhöhten spezifischen Verbrauch an Schweißwerkstoffen und Elektroenergie gekennzeichnet ist, von der ein großer Teil zum Auftragschweißen einer unnötig großen Verstärkung des Schweißpunkts verbraucht wird. Die Durchschmelzfähigkeit des Schweißbogens ist äußerst gering, ebenso die Qualität der entstandenen Schweißpunkte. Deshalb wird dieses Verfahren nur zum Schweißen dünnwandiger, wenig beanspruchter Konstuktionen verwendet.

Bekannt ist ein Nietschweißverfahren (SU-Urheberschein Nr. 108233, IPK$^3$ B 23 K 9/12), bei dem das Schweißen mit einer ummantelten Elektrode vorgenommen wird, die während des Schweißprozesses in relativ zu einer stromzuführenden Vorrichtung (zum Elektrodenhalter) fixierter Lage gehalten wird und die beim gleichmäßigen Zuführen in den Schmelzraum bei praktisch unveränderter Größe des Schweißstroms abschmilzt.

Im Vergleich zu dem vorher beschriebenen Verfahren hat dieses Verfahren ein breiteres Anwendungsgebiet, was dadurch begründet ist, daß die Schmelzelektrode mit einer der Schmelzgeschwindigkeit entsprechenden Geschwindigkeit in den Schmelzraum zugeführt wird und das Schweissen dickerer Verbindungen mit dem Zuschmelzen von Löchern im oberen Werkstück durch das Elektrodenmetall ermöglicht wird.

Gleichzeitig bedingen aber die geringe Zuführungsgeschwindigkeit der Elektrode, das Vorhandensein einer Ummantelung der Elektrode und eine bei diesem Schweißverfahren zulässige niedrige Stromdichte in der Elektrode eine äußerst geringe Konzentration der Wärmezufuhr im Schweßpunkt, eine niedrige Durchschmelzfähigkeit des Schweißbogens, eine erhebliche Dauer des Schweißzyklus', einen erhöhten Verbrauch an Schweißwerkstoffen und Elektroenergie und auch ein niedriges Niveau der Qualität der Schweißverbindungen.

Bekannt ist ein Metall-Inertgas-Lichtbogenpunktschweißverfahren, das mit Hilfe einer Vorrichtung für das Lichtbogenpunktschweißen realisiert wird (das Buch "Issledovania i proizvodstvenny opyt po svarke", und darin den Beitrag von Ju.M.Slessarev "Elektrozaklepochnaya svarka v stroitelnom i dorozhnom mashinostroenii", Verlag Mashgiz, 1955, S. 78-79) und bei dem das Schweissen unter Pulver geführt wird. Eine Schmelzelektrode

0258439

wird relativ zu einer stromzuführenden Vorrichtung fixiert, dann bringt man die Elektrode über der Oberfläche des zu durchschmelzenden Werkstücks in Stellung und zündet einen Schweißbogen zwischen dem Ende der Schmelzelektrode und der Oberfläche des Werkstücks. Die Elektrode schmilzt ab durch das gleichmäßige Herabsenken der stromzuführenden Vorrichtung zusammen mit der Elektrode bei praktisch konstanten Werten des Schweißstroms und der Länge des Bogens. Dabei befindet sich das Ende der Schmelzelektrode im Verlaufe des gesamten Schweißprozesses in solch einer Entfernung über der Oberfläche des Schweißwerkstücks, die praktisch der Länge des Schweißbogens gleicht, während im Augenblick des Beendens des Schweißens beim Auseinanderziehen des Schweißbogens das Ende der Schmelzelektrode in eine noch grössere Entfernung von der Oberfläche des Werkstücks gebracht wird. Das von der Elektrode abschmelzende Metall wird in großen Tropfen in den Schweißpunkt übertragen. Dabei entsteht ein Schweißpunkt (eine Lichtbogenniete) mit äußerst großer Verstärkung und kleiner Durchschmelzarbeitsfläche.

Durch die mechanisierte Zuführung der Schmelzelektrode in den Schmelzraum und den Schutz des Schweißbogens durch Schweißpulver ist dieses Verfahren durch eine etwas höhere Konzentration der Wärmezufuhr im Schweißpunkt und eine höhere Durchschmelzfähigkeit des Schweißbogens gekennzeichnet als die vorher beschriebenen Verfahren.

Auf Grund dessen, daß bei diesem Verfahren die Schmelzelektrode langsam in den Schmelzraum zugeführt wird, und zwar mit einer Geschwindigkeit, die der Schmelzgeschwindigkeit der Elektrode entspricht, läuft der Schweißprozes bei einem verlängerten Schweißbogen ab, der über der Oberfläche des durchzuschmelzenden Werkstücks brennt. Das führt zu einer niedrigen Konzentration der Wärmezufuhr im Schweißpunkt, einer erheblichen

- 4 -

Dauer des Schweißzyklus', einem erhöhten Verbrauch an Schweißwerkstoffen und Elektroenergie, von der ein großer Teil unrationell für eine unnötig große Verstärkung des Schweißpunkts verbraucht wird, schließt die Herstellung von Schweißpunkten ohne Verstärkung aus und bewirkt eine niedrige Qualität der Schweißverbindungen.

### Offenbarung der Erfindung

Der vorliegenden Erfindung liegt die Aufgabe zugrunde, ein Metall-Inertgas-Lichtbogenpunktschweißverfahren zu schaffen, bei dem das Verfahren zur Zuführung der Schmelzelektrode in den Schmelzraum und zur Herstellung eines Schweißpunkts eine Erhöhung der Konzentration der Wärmezufuhr im Schweißpunkt, eine Verkürzung der Dauer des Schweißzyklus'; die Entstehung eines Schweißpunkts/ohne Verstärkung, eine Erhöhung der Qualität der Schweißverbindungen und eine Senkung des Verbrauchs an Schweißwerkstoffen und Elektroenergie ermöglicht.

Die gestellte Aufgabe wird dadurch gelöst, daß in einem Metall-Inertgas-Lichtbogenpunktschweißverfahren, das darin besteht, daß eine Schmelzelektrode relativ zu einer stromzuführenden Vorrichtung fixiert wird, die Schmelzelektrode über der Oberfläche des zu durchschweissenden Werkstücks in Stellung gebracht, zwischen dem Ende der Schmelzelektrode und der Oberfläche des zu durchschmelzenden Werkstücks ein Schweißbogen gezündet die Schmelzelektrode in den Schmelzraum geführt und das Schweißen unter Bildung eines Schweißpunkts durchgeführt wird, gemäß der Erfindung die Zuführung der Schelzelektrode in den Schmelzraum durch sprunghaftes Annähern der stromzuführenden Vorrichtung an die Oberfläche des zu durchschmelzenden Werkstücks mit einer Geschwindigkeit, die größer als die Schmelzgeschwindigkeit der Elektrode ist, vorgenommen wird.

Es ist vorteilhaft, daß bei der sprunghaften Verkür-

- 5 -

zung der Ausladung der Schmelzelektrode ihr Ende in den Schmelzraum unter das Niveau der Oberfläche des zu durchschmelzenden Werkstücks bis auf eine Tiefe eingetaucht wird, die wenigstens ein Prozent der Dicke des zu durchschmelzenden Werkstücks ausmacht und das Schweißen vorgenommen wird, indem es vom Moment der Zündung des Schweißbogens<sup>an</sup>begonnen und bis zum Moment des Beginns der Übertragung des Elektrodenmetalls in den Schweißpunkt fortgesetzt wird.

Die vorliegende Erfindung ermöglicht eine zehn- und mehrfache Verkürzung der Dauer des Schweißzyklus' und des Verbrauchs an Schweißwerkstoffen und eine Erhöhung der Schweißleistung. Dabei wird eine mehrfache Senkung des Elektroenergieverbrauchs, eine wesentliche Verbesserung der Qualität der Schweißverbindungen, eine erhebliche Verminderung der Schweißdeformationen und eine Verbesserung des Aussehens des Werkstücks erzielt.

<u>Kurze Beschreibung der Zeichnungen</u>

Im folgenden wird die Erfindung durch konkrete Durchführungsbeispiele mit Hinweisen auf Zeichnungen erläutert. Es zeigt:

Fig. 1 die gegenseitige Anordnung der Schmelzelektrode, der stromzuführenden Vorrichtung und des zu schweissenden Werkstücks im Anfangsstadium des Schweißprozesses gemäß der Erfindung;

Fig. 2 das den Beginn der Zuführung der Schmelzelektrode in den Schmelzraum kennzeichnende Stadium des Schweißprozesses gemäß der Erfindung;

Fig. 3 das das Ende der Zuführung der Schmelzelektrode in den Schmelzraum kennzeichnende Stadium des Schweißprozesses gemäß der Erfindung;

Fig. 4 das das Ausschalten des Schweißbogens und die Bildung eines Schweißpunkts ohne Verstärkung kennzeichnende Stadium des Schweißprozesses gemäß der Erfindung;

Fig. 5 das die Fortsetzung des Schweißens und den Beginn der Bildung einer Verstärkung auf dem Schweißpunkt kennzeichnende Stadium des Schweißprozesses gemäß der Erfindung;

Fig. 6 ein Zwischenstadium des Bildungsprozesses einer Verstärkung auf dem Schweißpunkt gemäß der Erfindung;

Fig. 7 das Endstadium des Bildungsprozesses eines Schweißpunkts gemäß der Erfindung.

## Beste Durchführungsvariante der Erfindung

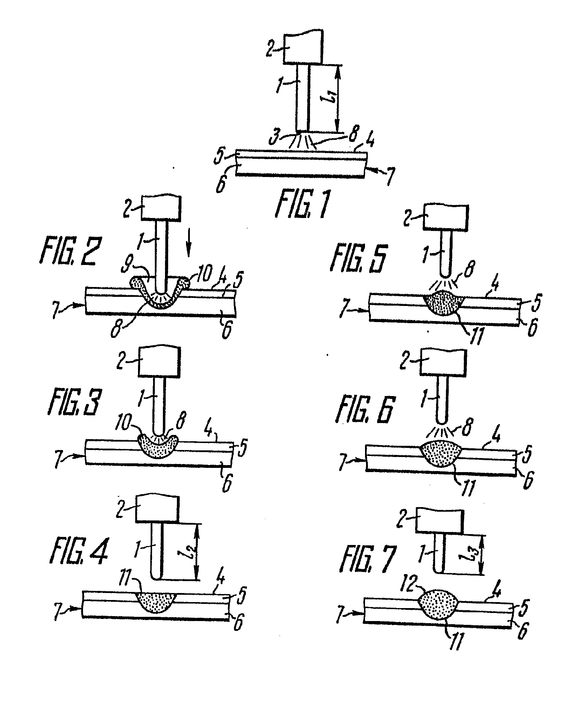

Das erfindungsgemäße Metall-Inertgas-Lichtbogenpunktschweißverfahren wird auf folgende Weise durchgeführt. Eine in einen Schweißapparat gesteckte Schmelzelektrode 1 (Fig. 1) wird relativ zu einer stromzuführenden Vorrichtung 2 bei vorgegebenem Wert der Ausladung $l_1$ der Schmelzelektrode 1 fixiert. Der Wert $l_1$ wird in Abhängigkeit vom Durchmesser der Elektrode 1 und den geforderten Kennwerten des Schweißbetriebs festgelegt. Dann bringt man das Ende 3 der Schmelzelektrode 1 über der Oberfläche 4 eines zu durchschmelzenden Elements 5 in Stellung, das mit dem Element 6 eines Werkstücks 7 verschweißt werden soll. Dann wird ein Schutz der Schweißzone vor der umgebenden Luft entweder mit Hilfe eines Schweißpulvers oder eines Schutzgases geschaffen und ein Schweißbogen 8 zwischen dem Ende 3 der Schmelzelektrode 1 und der Oberfläche 4 des zu durchschmelzenden Elements 5 gezündet. Die Zündung des Schweißbogens 8 geschieht entweder mit Hilfe eines Oszillators oder auf eine beliebige andere bekannte Weise. Dann nähert man sprunghaft die stromzuführende Vorrichtung 2 in Pfeilrichtung (Fig. 2) der Oberfläche 4 des Elements 5, wodurch sich augenblicklich die Länge des Schweißbogens 8 verkürzt. Dabei kommt es zu einem heftigen Anstieg des Schweißstroms, eine hohe Stromdichte stellt sich ein und es beginnt ein intensives Verdampfen des Metalls

0258439

der Schmelzelektrode 1 an deren Ende 3.

Die Geschwindigkeit einer solchen Zuführung der Schmelzelektrode 1 ist immer größer als ihre Schmelzgeschwindigkeit, wodurch das Ende 3 der Elektrode 1 unter die Oberfläche 4 des zu durchschmelzenden Elements 5 getaucht wird. Das gewährleistet eine sehr hohe Konzentration der Wärmezufuhr im Metall der Elemente 5 und 6 des Werkstücks 7. Die Tiefe, bis auf die man das Ende 3 der Elektrode 1 in den Schmelzraum 9 eintaucht, muß so groß sein, daß sich der gesamte Schweißbogen 8 unter der Oberfläche 4 des Elements 5 befindet. Nur bei dieser Bedingung wird die Erzielung einer höchstmöglichen Konzentration der Wärmezufuhr in den Elementen 5 und 6, eine Erhöhung der Durchschmelzfähigkeit des Bogens 8, eine Verkürzung des Zyklus' und eine Verbesserung der Schweißqualität gewährleistet. Darum muß man, um diese hohen Kennwerte zu garantieren, das Ende 3 der Elektrode 1 in den Schmelzraum 9 unter die Oberfläche 4 des zu durchschmelzenden Elements 5 bis auf eine Tiefe tauchen, die wenigstens ein Prozent der Dicke des Elements 5 ausmacht. In Abhängigkeit von der technologischen Aufgabenstellung kann das Eintauchen des Endes 3 in den Schmelzraum 9 auch auf eine Tiefe erfolgen, die der Dicke des zu durchschmelzenden Elements 5 gleicht oder größer ist.

Das durch den Schweißbogen 8 verdrängte flüssige Metall 10 des Werkstücks 7 macht den Weg für den Plasmalichtbogen 8 frei, der dabei eine maximal mögliche Konzentration der Wärmezufuhr im Metall des Werkstücks 7 erzeugt.

Dann unterbricht man die Zuführung der Schmelzelektrode 1 (Fig. 3) in den Schmelzraum 9. Infolge der fortlaufenden Verdampfung des Metalls am Ende 3 der Schmelzelektrode 1 vergrößert sich etwas die Länge des Schweißbogens 8, und der Druck, den der Bogen 8 auf das flüssige Metall 10 ausübt, wird geringer. Das verdrängte flüssige Metall 10, das aus geschmolzenem Metall der Elemente 5 und 6 des zu schweißenden Werkstücks 7 besteht

- 8 -

und von Kräften der Oberflächenspannung und der Schwerkraft gehalten wird, beginnt, in die Ausgangslage zurückzukehren. Dann schaltet man den Schweißbogen 8 ab.
Damit ist der Schweißprozeß beendet, und man erhält
einen Schweißpunkt 11 ohne Verstärkung (Verdickung) der
Oberfläche 4 des Elements 5 des Werkstücks 7.

Nach dem Entstehen eines Schweißpunkts 11 ohne Verstärkung bekommt die Schmelzelektrode 1 eine etwas kleinere Ausladung, die den Wert $l_2$ annimmt. Das hängt mit
dem teilweisen Verdampfen des Metalls am Ende 3 der
Elektrode 1 infolge der erhöhten Stromdichte im Plasmalichtbogen 8 zusammen.

Wenn man den Schweißprozeß nach Beginn des Schmelzens und der Tropfenübertragung des Metalls der Schmelzelektrode 1 (Fig. 5, 6 und 7) fortsetzt, erhält man einen Schweißpunkt 11 mit einer Verstärkung in Form einer
Verdickung 12. Die Ausladung der Schmelzelektrode 1
wird in diesem Fall noch kleiner und nimmt den Wert $l_3$
(Fig. 7) an. Danach schaltet man den Bogen 8 ab und unterbricht den Schweißprozeß.

Auf diese Weise erhält man je nach der technologischen Aufgabenstellung einen Schweißpunkt 11 entweder
mit einer Verstärkung in Form einer Verdickung 12, oder
ohne solche (Fig. 4).

Das Lichtbogenpunktschweißen nach der vorliegenden
Erfindung geschieht bei einer Stromdichte in der Schmelzelektrode 1 (Fig. 1) von über 250 A/mm$^2$. Als Schmelzelektrode 1 können sowohl Volldrähte, als auch Sinterdrähte in Form einzelner, zusammengesetzter oder aus
mehreren Drähten zusammengedrehter Schmelzelektroden 1
verwendet werden.

Im folgenden wird das erfindungsgemäße Verfahren
durch Durchführungsbeispiele erläutert.

Beispiel 1

Im Unterpulver-Lichtbogenpunktschweißverfahren soll
ein Überlappstoß von 2 bis 4 mm Dicke hergestellt werden.
Der Stoff des Grundmetalls ist ein warmgewalzter niedrig-

- 9 -

gekohlter Stahl ohne Oberflächenvorbehandlung, der Stoff des Drahts (der Schmelzelektrode 1) - ein niedriggekohlter Stahl. Die Verbindung wird mit einem Zwischenraum von 0,3 mm zusammengelegt.

Schweißparameter:

Durchmesser der Schmelzelektrode 1 /mm/ ............. 3,0
Ausladung der Schmelzelektrode 1 /mm/ ............. 30
Schweißstrom /A/ ..................................... 2800
Schweißzeit /s/ ..................................... 0,5

Der Schweißbogen 8 ist vor Beginn der Übertragung des Metalls der Elektrode 1 in den Schweißpunkt 11 abgeschaltet worden. Im Ergebnis ist ein Schweißpunkt 11 mit einem Außendurchmesser von 12,0 mm und einem Durchmesser in der Übergangszone von einer Verbindungsstelle zur anderen (im Kern) von 9,0 mm entstanden. Nach dem Schweißen verkürzte sich die Ausladung der Schmelzelektrode 1 um 2 mm.

Die entstandene Lichtbogenniete hat keine Verstärkung in Form einer Verdickung und keine inneren und äußeren Fehler.

Beispiel 2

Im Unterpulver-Lichtbogenpunktschweißverfahren soll eine ebensolche Verbindung hergestellt werden wie im Beispiel 1, der Schweißpunkt 11 (die Lichtbogenniete) (Fig. 7) soll jedoch eine Verstärkung 12 in Form einer Verdickung haben.

Schweißparameter:

Durchmesser der Schmelzelektrode 1 /mm/ ....... 3,0
Ausladung der Schmelzelektrode 1 vor dem
Schweißen /mm/ ................................. 30
Ausladung der Schmelzelektrode 1 nach dem
Schweißen /mm/ ................................. 25
Schweißstrom /A/ ............................... 2800
Schweißzeit /s/ ............................... 0,1

Der Schweißbogen 8 ist nach Beginn der Übertragung des Elektrodenmetalls in die flüssige Schmelze und der Bildung einer Verstärkung 12 über dem Schweißpunkt 11 in Form einer Verdickung abgeschaltet worden.

Durch das Schweißen ist eine Lichtbogenniete (ein Schweißpunkt 11) mit einem Durchmesser des Kerns zwischen den zu schweißenden Blechen von 10 mm und einem Außendurchmesser von 13 mm bei einer Höhe der Verstärkung von 1,2 bis 1,5 mm entstanden.

Beispiel 3

Im $CO_2$-Lichtbogenpunktschweißverfahren soll ein Überlappstoß von 1,2 bis 3,0 mm Dicke hergestellt werden. Der Stoff des Grundmetalls ist ein warmgewalzter, niedriggekohlter Stahl ohne Oberflächenvorbehandlung, der Stoff des Drahts - (der Schmelzelektrode 1) - ein niedriglegierter Stahl.

Schweißparameter:

Durchmesser der Schmelzelektrode 1 /mm/ ......... 2,0
Stromdichte in der Elektrode 1 / A/mm$^2$ /........ 400
Schweißzeit /s/ ................................... 0,05

Durch das Schweißen ist eine Lichtbogenniete mit einem Außendurchmesser von 7,00 mm und einem Durchmesser in der Übergangszone von einem der zu verbindenden Bleche zum anderen (im Kern) von 5,5 mm entstanden.

Die entstandene Lichtbogenniete hat ebenfalls keine Verstärkung (Verdickung) und irgendwelche inneren oder äußeren Fehler.

Die mechanischen Eigenschaften der entstandenen Punktschweißverbindungen entsprechen allen an sie gestellten Anforderungen.

Das erfindungsgemäße Verfahren kann erfolgreich sowohl beim aufeinanderfolgenden Einzelpunktschweißen, als auch beim zur gleichen Zeit parallel verlaufenden Mehrpunktschweißen von einer oder mehreren, parallel geschalteten Stromquellen angewendet werden. Dabei ist das Schweißen eines Werkstücks 7 möglich, bei dem das durchzuschmelzende Element 5 aus zwei oder mehr Schichten bestehen kann.

- 11 -

Außerdem ist die Anwendung des erfindungsgemäßen Verfahrens auch beim Schweißen anderer Verbindungen möglich, z.B. von Winkelstößen oder T-Stößen.

Die Realisierung des Lichtbogenpunktschweißverfahrens nach der vorliegenden Erfindung gewährleistet infolge der Zuführung der Schmelzelektrode 1 (Fig. 2) in den Schmelzraum 9 durch sprunghaftes Annähern der stromzuführenden Vorrichtung 2 an die Oberfläche 4 des Elements 5 mit einer Geschwindigkeit, die größer als die Schmelzgeschwindigkeit der Elektrode 1 ist, eine Führung des Prozesses beim Tauchen des Endes 3 der Schmelzelektrode 1 in den Schmelzraum 9 unter die Oberfläche 4 des zu durchschmelzenden Elements 5. Dabei werden Bedingungen geschaffen, die eine sprunghafte Erhöhung der Konzentration der Wärmezufuhr im Schweißpunkt 11 (Fig. 4, 5, 6, 7) garantieren und eine zehn- und mehrfache Verkürzung der Dauer des Schweißzyklus' und des Verbrauchs an Schweißwerkstoffen, eine mehrfache Senkung des Elektroenergieverbrauchs, eine wesentliche Verringerung der Schweißdeformationen, eine Verbesserung der Qualität der Schweißverbindungen und des Aussehens der Werkstücke gewährleisten. Das Verfahren gewährleistet auch die Herstellung von Schweißpunkten 11 ohne Verstärkung, weshalb in der Mehrzahl der Fälle das erfindungsgemäße Verfahren das Widerstandspunktschweißen ersetzen kann, für dessen Realisierung eine teure und umständliche Ausrüstung benötigt wird und das höhere Anforderungen an die Vorbereitung der Werkstücke zum Schweißen stellt.

Außerdem kann das erfindungsgemäße Verfahren auf Grund des äußerst geringen Volumens des geschmolzenen Metalls im Schweißpunkt 11 erfolgreich beim Schweißen von Metall in einem weiten Bereich der Dicken des Metalls in allen räumlichen Lagen angewendet werden.

Industrielle Anwendbarkeit

Die vorliegende Erfindung kann zur Herstellung von Werkstücken und Konstruktionen unter Verwendung von Punkt- und Nietschweißverbindungen in verschiedenen Schutzmedien und unterschiedlicher Lage im Raum angewendet werden.

PATENTANSPRÜCHE

1. Metall-Inertgas-Lichtbogenpunktschweißverfahren, das darin besteht, daß eine Schmelzelektrode (1) relativ zu einer stromzuführenden Vorrichtung (2) fixiert wird, die Schmelzelektrode (1) über der Oberfläche (4) des zu durchschweißenden Elements (5) in Stellung gebracht, zwischen dem Ende (3) der Schmelzelektrode (1) und der Oberfläche (4) des zu durchschmelzenden Elements (5) ein Schweißbogen (8) gezündet, die Schmelzelektrode (1) in den Schmelzraum (9) geführt und das Schweißen unter Bildung eines Schweißpunkts (11) durchgeführt wird, d a d u r c h   g e k e n n z e i c h - n e t , daß die Zuführung der Schmelzelektrode (1) in den Schmelzraum (9) durch sprunghaftes Annähern der stromzuführenden Vorrichtung (2) an die Oberfläche (4) des zu durchschmelzenden Elements (5) mit einer Geschwindigkeit, die größer als die Schmelzgeschwindigkeit der Elektrode (1) ist, vorgenommen wird.

2. Metall-Inertgas-Lichtbogenpunktschweißverfahren nach Anspruch 1, d a d u r c h   g e k e n n z e i c h - n e t , daß bei der sprunghaften Verkürzung der Ausladung der Schmelzelektrode (1) ihr Ende (3) in den Schmelzraum (9) unter das Niveau der Oberfläche (4) des zu durchschmelzenden Elements (5) bis auf eine Tiefe eingetaucht wird, die wenigstens ein Prozent der Dicke des zu durchschmelzenden Elements (5) ausmacht und das Schweißen derart vorgenommen wird, das es im Moment der Zün- dung des Schweißbogens (8) beginnt  und  im   Moment des Beginns der Übertragung des Metalls der Schmelzelektrode (1) in den Schweißpunkt (11) beendet wird.

0258439

FIG. 1

FIG. 2

FIG. 3

FIG. 4

FIG. 5

FIG. 6

FIG. 7

# INTERNATIONAL SEARCH REPORT

0258439

International Application No **PCT/SU86/00013**

## I. CLASSIFICATION OF SUBJECT MATTER (if several classification symbols apply, indicate all) 6

According to International Patent Classification (IPC) or to both National Classification and IPC

IPC$^4$   B 23 K 9/18, 9/16

## II. FIELDS SEARCHED

### Minimum Documentation Searched 7

| Classification System | Classification Symbols |
|---|---|
| IPC$^4$ | B 23 K 9/00 |

### Documentation Searched other than Minimum Documentation to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | DE, C1, 2953561 (Char'kovskij aviacionnyj institut imeni N.E. Zukovskogo), 8 March 1984 (08.03.84) | 1 |
| A | JP, A, 59-209479  28 November 1984 (28.11.84) | 1 |
| A | SU, A1, 556008 (Ordena Trudovogo Krasnogo Znameni tsentzalny nauchno-issledovatelsky institut stroitelnykh konstruktsy im. V.A. Kucherenko) 13 June 1977 (13.06.77) | 1 |
| A | SU, A1, 743805 (A.Ya. Brodsky et al.) 30 June 1980 (30.06.80) | 2 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 18 September 1986 (18.09.86) | 5 November 1986 (05.11.86) |

| International Searching Authority | Signature of Authorized Officer |
|---|---|
| ISA/SU | |

Form PCT/ISA/210 (second sheet) (January 1985)